# FASCICULE DE BREVET EUROPEEN

(11) **EP 1 022 487 B1**
(45) Date de publication et mention de la délivrance du brevet: **02.01.2004**
(21) Numéro de dépôt: 00400158.2
(22) Date de dépôt: 21.01.2000
(51) Int. Cl.: F16H 7/08

(54) **Tendeur comportant des moyens d'amortissement hydraulique et son procédé de fabrication**
Spannvorrichtung mit hydraulischer Dämpfungseinrichtung und Verfahren zur Herstellung
Tensioner comprising hydraulic damping means and method of manufacturing the same

(30) Priorité: 25.01.1999 FR 9900776
(43) Date de publication de la demande: 26.07.2000
(73) Titulaire: HUTCHINSON, 75008 Paris (FR)
(72) Inventeur: Rointru, Claude, 37130 Mazieres de Touraine (FR); Defeings, Patrice, 37340 Ambillou (FR)
(74) Mandataire: Doireau, Marc

(56) Documents cités:
- EP-A- 0 407 261
- EP-A- 0 560 685
- EP-A- 0 926 396
- WO-A-96/36823
- DE-A- 19 650 289
- US-A- 4 790 801
- US-A- 4 997 410
- PATENT ABSTRACTS OF JAPAN vol. 012, no. 152 (M-695), 11 mai 1988 (1988-05-11) & JP 62 274142 A (HONDA MOTOR CO LTD;OTHERS: 01), 28 novembre 1987 (1987-11-28)

## Description

La présente invention se rapporte principalement à un tendeur comportant des moyens d'amortissement hydraulique et à son procédé de fabrication.

De manière classique, un tendeur comporte un embout de fixation et une chape de montage d'un galet de roulement sur une courroie reliés par un ressort et par des moyens de guidage comportant un tube formant cylindre et un piston. Un exemple de tendeur dépourvu de moyens d'amortissement illustré sur la figure 1 est décrit dans la Demande de Brevet FR 97 16078, non publiée au jour du dépôt de la présente Demande.

Des modèles plus perfectionnés comportent, en outre, des moyens d'amortissement hydrauliques par écoulement d'un fluide visqueux à travers un orifice calibré induisant, au moins pour un sens d'écoulement, des pertes de charge importantes. Un exemple de tendeur comportant des moyens d'amortissement est décrit dans FR-A-2 688 565.

La Demanderesse évite les risques de colmatage de l'orifice calibré en assurant l'assemblage en salle blanche (locaux dépourvus de poussière), du dispositif d'amortissement dans le tube du tendeur et en disposant un filtre empêchant la propagation d'éventuelles impuretés vers l'orifice calibré. Il est à noter que les opérations réalisées en salle blanche augmentent le prix de revient des tendeurs.

Les fabricants sont amenés à proposer divers modèles de tendeurs adaptés à diverses utilisations. Les tendeurs dépourvus de moyens d'amortissement peuvent être munis d'un embout de fixation surmoulé dont le prix de revient est modéré alors que l'on doit sertir les embouts sur un tube formant cylindre, après introduction dans ce tube du dispositif d'amortissement dans le cas des tendeurs comportant un tel dispositif.

Le document EP 0 560 685 A divulgue un tendeur en accord avec le préambule de la revendication 1.

Ainsi, un fabricant de tendeurs ne peut offrir à ses clients une gamme de tendeurs qu'en augmentant son prix de revient, cette augmentation résultant, d'une part, du prix de revient plus élevé de la fixation par sertissage de l'embout de fixation des tendeurs munis d'un dispositif d'amortissement et, d'autre part, de la mise en oeuvre d'embouts spécifiques différents pour des tendeurs munis d'un dispositif d'amortissement et pour des tendeurs sans dispositif d'amortissement. De plus, le montage en salle blanche des tendeurs munis des dispositifs d'amortisseurs en augmente encore le prix de revient.

C'est par conséquent un but de la présente invention d'offrir un tendeur avec un dispositif d'amortissement ayant un prix de revient modéré.

C'est également un but de la présente invention d'offrir un tel tendeur comportant un embout de fixation et/ou une chape de réception d'un galet surmoulé(s) sur le corps du tendeur.

C'est aussi un but de la présente invention d'offrir une gamme de tendeurs utilisant une base commune ou une grande quantité de pièces communes.

Ces buts sont atteints par un tendeur selon la présente invention comportant une liaison de guidage en translation de la chape de montage d'un galet par rapport à un embout de fixation comportant un tube sensiblement cylindrique formant le cylindre et recevant un piston monté à translation. Le tendeur selon la présente invention comporte en outre une cassette sensiblement cylindrique comprenant le mécanisme de régulation des pertes de charge lors de l'écoulement de fluide, ayant un diamètre externe sensiblement égal au diamètre interne du tube formant cylindre.

Le tendeur est muni de moyens d'immobilisation axiale de la cassette par frottement sur la paroi interne du cylindre. En variante, la cassette est solidarisée au tube, par exemple par sertissage. Ainsi, il est possible d'introduire la cassette par une des extrémités du tube formant cylindre d'un tendeur partiellement assemblé, notamment un tendeur dont l'une des extrémités du tube formant cylindre est libre tandis que l'autre extrémité est déjà munie d'un embout de fixation ou d'une chape de réception d'un moyen d'appui sur une courroie, notamment d'un galet. Lors de l'assemblage, une poussée sur la cassette permet de l'amener à son emplacement définitif dans le tube. La chape ou l'embout de fixation fixé préalablement à l'introduction de la cassette est avantageusement assemblé par surmoulage. En variante, la cassette est introduite du côté de l'embout avant surmoulage.

Avantageusement, la cassette du dispositif d'amortissement selon la présente invention comporte un ou plusieurs filtres empêchant la propagation d'impuretés vers l'orifice calibré de perte de charge. Ainsi, seule la cassette est assemblée en salle blanche sans compromettre la fiabilité du tendeur qui peut être assemblé dans un atelier sans avoir à prendre des précautions particulières pour éviter la contamination par la poussière. Il en résulte une réduction importante du prix de revient des tendeurs selon la présente invention. Toutefois, les tendeurs selon la présente invention peuvent être assemblés en salle blanche pour protéger de toute contamination les éventuels orifices de passage de fluide disposés sur les axes des pistons.

La présente invention a principalement pour objet un tendeur pour courroie comprenant une première extrémité comportant des moyens de solidarisation avec un support et une seconde extrémité opposée à ladite première extrémité munie de moyens d'appui sur la courroie, les deux extrémités du tendeur étant reliées par un corps élastique et par des moyens de guidage comportant un tube formant cylindre solidarisé avec une première desdites extrémités et un piston monté à translation dans ledit tube et solidarisé avec la seconde desdites extrémités, ledit piston délimitant dans le tube formant cylindre au moins une chambre de volume variable, le piston assurant le pompage d'un fluide à partir et/ou vers au moins une chambre lors de la variation de distance relative entre les deux extrémités du tendeur, caractérisé en ce qu'il comporte une cassette de régulation d'écoulement de fluide pompé par le piston, disposée dans le tube formant cylindre et ayant un corps cylindrique dont le diamètre externe est sensiblement égal au diamètre interne du tube de manière à pouvoir coulisser dans le tube lors de l'assemblage du tendeur.

La présente invention a aussi pour objet un tendeur, caractérisé en ce que la cassette comporte un clapet se fermant lors du rapprochement des deux extrémités du tendeur.

La présente invention a également pour objet un tendeur, caractérisé en ce qu'il comporte une ouverture calibrée.

La présente invention a aussi pour objet un tendeur, caractérisé en ce qu'il comporte des moyens d'immobilisation axiale par frottement de la cassette dans le tube.

La présente inventeur a également pour objet un tendeur, caractérisé en ce que les moyens d'immobilisation axiale de la cassette dans le tube est un joint annulaire.

La présente invention a aussi pour objet un tendeur, caractérisé en ce que le joint annulaire assurant l'immobilisation axiale de la cassette dans le tube est un joint torique disposé dans une gorge annulaire ménagée dans le corps de la cassette et débouchant sur la face interne du tube.

La présente invention a également pour objet un tendeur, caractérisé en ce que le clapet est un clapet à bille.

La présente invention a aussi pour objet un tendeur, caractérisé en ce qu'il comporte un canal ménagé dans le piston muni d'un orifice calibré permettant l'écoulement de fluide entre une première chambre à volume variable, délimité par le piston et une deuxième chambre, à volume variable, délimité par le piston.

La présente invention a également pour objet un tendeur, caractérisé en ce qu'il comporte un filtre de protection de l'orifice calibré et/ou du clapet contre la contamination par des impuretés portées par le fluide.

La présente invention a aussi pour objet un tendeur, caractérisé en ce qu'il comporte en outre une chambre basse pression, annulaire, entourant le tube formant cylindre.

La présente invention a également pour objet un tendeur, caractérisé en ce qu'il comporte un embout de fixation surmoulé sur une des extrémités du tube et en ce que la cassette se trouve à proximité de l'extrémité du tube portant l'embout de fixation.

La présente invention a aussi pour objet un tendeur, caractérisé en ce que la cassette comporte une portée rigide, déformée plastiquement de manière à prendre appui sur la face interne du tube, en immobilisant la cassette dans le tube dans la position désirée.

La présente invention a également pour objet un procédé de fabrication d'un tendeur, caractérisé en ce qu'il comporte les étapes consistant à :
a) solidariser un embout de fixation ou des moyens supports d'un moyen d'appui sur une courroie à une première extrémité d'un tube de réception d'un piston ;
b) introduire axialement, par l'extrémité opposée libre du tube. une cassette de régulation de l'écoulement de fluide ;
c) solidariser l'extrémité du piston 33 qui n'est pas engagée dans le tube 31 avec des moyens supports d'un moyen d'appui sur une courroie ou avec un embout de fixation.

La présente invention a aussi pour objet un procédé, caractérisé en ce qu'entre les étapes b) et c), il comporte en outre une étape consistant à faire translater la cassette, sur sensiblement toute la longueur du tube en direction de l'embout de fixation.

La présente invention a également pour objet un procédé de fabrication d'un tendeur, caractérisé en ce qu'il comporte des étapes consistant à :
- introduire dans un tube une cassette de régulation de l'écoulement de fluide ;
- surmouler un élément d'extrémité du tendeur choisi dans un ensemble comportant un embout de fixation et des moyens supports d'un moyen d'appui sur une courroie, à une première extrémité du tube, en utilisant la cassette comme moyen d'obturation du tube lors du surmoulage empêchant la propagation de la matière de surmoulage dans le tube ;
- fixer à l'extrémité du piston 33 qui n'est pas engagée dans le tube 31 l'autre élément d'extrémité du tendeur choisi dans un ensemble comportant des moyens supports d'un moyen d'appui sur une courroie et un embout de fixation.

La présente invention a aussi pour objet un procédé caractérisé en ce que l'élément d'extrémité du tendeur surmoulé est un embout de fixation.

La présente invention sera mieux comprise au moyen de la description ci-après et des figures annexées données comme des exemples non limitatifs et sur lesquelles :
- la figure 1 est une vue en coupe longitudinale avec arrachement partiel d'un tendeur de la Demande FR 97 16078 ;
- la figure 2 est une vue analogue d'un premier exemple de réalisation du tendeur selon la présente invention ;
- la figure 2a est une vue à plus grande échelle d'un détail du tendeur de la figure 2 ;
- la figure 3 est une vue analogue d'un deuxième exemple de réalisation d'un tendeur selon la présente invention ;
- la figure 3a est une vue à plus grande échelle d'un détail du tendeur de la figure 3 ;
- la figure 3b est une vue à encore plus grande échelle d'un détail du tendeur de la figure 3 ;
- la figure 4 est une vue analogue d'un troisième exemple de réalisation d'un tendeur selon la présente invention.

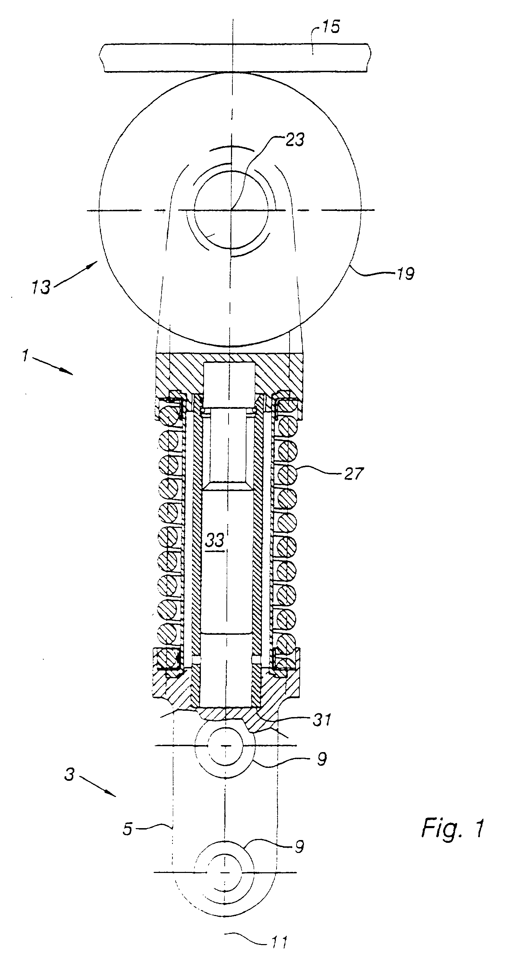

Sur les figures 1 à 4, on a utilisé les mêmes références pour désigner les mêmes éléments.

Sur la figures 1, on peut voir un tendeur linéaire 1 susceptible de servir de base au tendeur selon la présente invention, muni à une première extrémité 3 d'un embout de fixation 5 comportant des moyens de solidarisation avec un support, typiquement sur le carter d'un moteur ou avec une platine montée à rotation sur le carter moteur. On entend par solidarisation une immobilisation aussi bien axiale qu'angulaire (0° de liberté).

Dans l'exemple préféré illustré, l'embout de fixation 5 comporte deux ouvertures 9 longitudinales et parallèles entre elles, disposées orthogonalement à un axe 11 du tendeur, chacune susceptible de recevoir un boulon de fixation. Avantageusement, les ouvertures 9 de réception de boulons ont une forme allongée susceptible de recevoir un boulon de fixation en divers points, permettant de fixer le tendeur selon la présente invention dans diverses positions et notamment de déplacer le tendeur par rapport à des boulons de fixation, de manière à rattraper les dispersions géométriques des accessoires entraînés par une courroie 15 ainsi que la tolérance de fabrication de cette courroie. De plus, un tel tendeur peut s'adapter, sans modification, à diverses configurations de moteurs.

Après serrage des boulons l'embout de fixation 5 est solidarisé avec son support alors qu'une chape 17 disposée à une extrémité 13 opposée à l'extrémité 3 peut se déplacer de manière à mettre une courroie 15 sous tension, rattraper les variations relatives de longueur de la courroie 15 sous l'effet de son usure, de la température et de la prise de puissance des accessoires entraînés par la courroie.

Il est bien entendu que les boulons peuvent être remplacés par tout autre moyen de fixation de type connu.

Une seconde extrémité 13 du tendeur 1 comporte des moyens d'appui adaptés à la courroie 15 dont il doit réguler la tension mécanique.

Dans l'exemple préféré illustré, l'extrémité 13 comporte une chape 17 munie d'un galet 19 avantageusement monté sur un roulement par exemple de type roulement à billes d'axe 23, la surface de roulement du galet 19 est adaptée à la courroie 15.

Les extrémités 3 et 13 du tendeur 1 sont reliées par des moyens connus comme par exemple un ressort hélicoïdal 27 à spires non jointives ainsi que par un tube 31 formant cylindre solidarisé avec l'embout 5 et recevant un piston 33 monté en translation dans le tube 31 et solidarisé avec la chape 17. Le ressort hélicoïdal a tendance à écarter les extrémités 3 et 13 du tendeur 1, alors que l'ensemble piston 33-cylindre 31 participe à la rigidification du tendeur 1 et au guidage axial lors de la translation relative desdites extrémités 3 et 13 du tendeur.

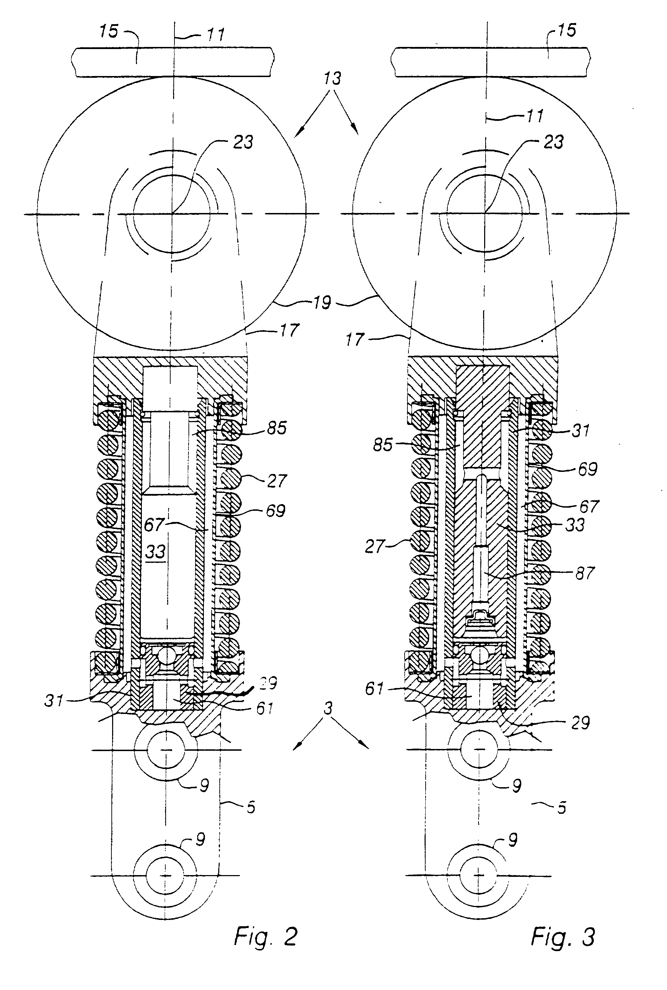

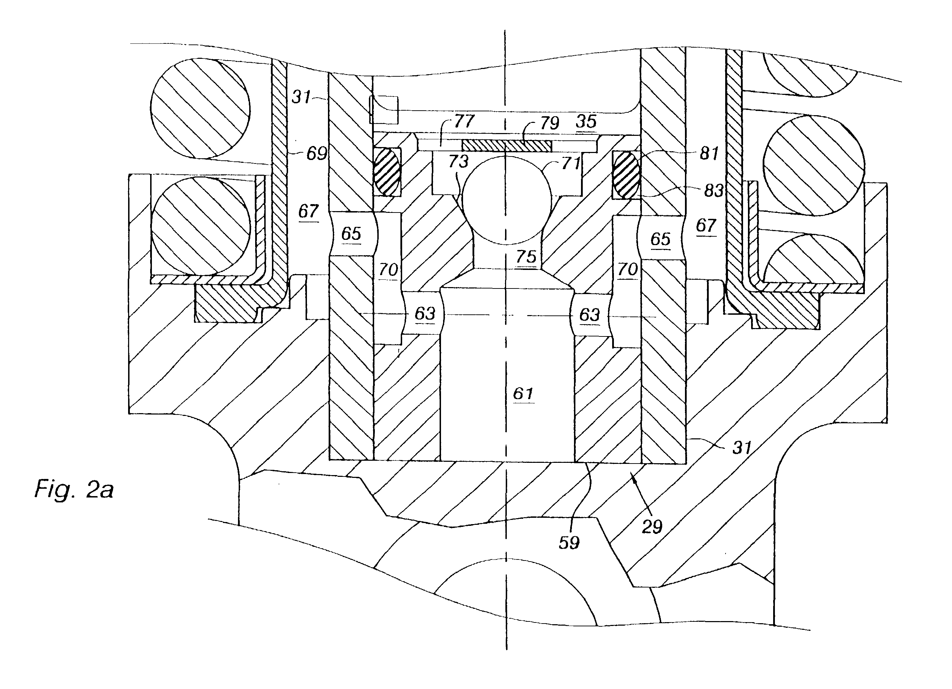

Selon la présente invention, comme illustré sur la figure 2, on introduit dans le tube 31 une cassette 29 de régulation de l'écoulement du fluide pompé par le piston 33. La cassette 29 selon la présente invention comporte un corps sensiblement cylindrique 59 dont l'axe est confondu avec l'axe 11 du tube 31 formant cylindre et dans lequel est ménagé un canal axial 61 de circulation de fluides relié à une chambre haute pression interne 35 et, par exemple par deux canaux radiaux 63 diamétralement opposés, chacun connecté à une ouverture 65 pratiquée dans le tube 31, à une chambre annulaire basse pression externe 67 délimitée radialement par la face externe du tube 31 et par la face interne d'une paroi souple 69, réalisée de préférence en élastomère, entourant le tube 31. Dans l'exemple préféré illustré, la paroi 69 est disposée entre le tube 31 et le ressort 27. En variante, la paroi 69 délimitant la chambre basse pression 67 peut former un surmoulage du ressort 27 ou entourer ce ressort. La paroi 69 est scellée hermétiquement sur les extrémités 3 et 13 du tendeur.

Dans l'exemple avantageux illustré, les canaux radiaux 63 débouchent dans une chambre annulaire 70 de la cassette 29 qui assure la connexion avec les ouvertures 65. Ainsi, la connexion entre les ouvertures 65 et les canaux 63 est assurée indépendamment de leur orientation angulaire relative.

Avantageusement, la chambre annulaire 70 présente une extension axiale de manière à permettre la connexion des canaux radiaux 63 aux ouvertures radiales 65 même dans le cas d'une erreur de positionnement axial de la cassette 29 dans le tube 31.

Avantageusement, la cassette 29 comporte un clapet, par exemple un clapet à billes 71 reposant sur un siège sensiblement tronconique 73 relié au canal central 61 par un passage 75. Il est bien entendu que la mise en oeuvre d'autres types de clapets ne sort pas du cadre de la présente invention. La bille 71 est retenue dans une cage fermée, par exemple par une rondelle 77 en étoile comportant des passages de fluide périphériques dont le diamètre est avantageusement inférieur au diamètre de la bille 71. En variante, le passage des fluides 79 comporte des moyens de rétention de la bille assurant également le filtrage du fluide d'amortissement, typiquement de l'huile. Dans une variante avantageuse, un filtre est disposé sous la bille 71 dans le canal 61 au niveau du raccordement des canaux 63.

Le siège 73 se trouve dans la partie du tendeur orientée vers le bas de manière à ce que, la bille 71 ait tendance à être plaquée sur le siège 73 par l'accélération de la pesanteur. Lors de l'éloignement relatif des extrémités 3 et 13 du tendeur selon la présente invention, le piston 33 remonte dans le tube 31 formant cylindre, augmentant le volume libre de la chambre 35 et par suite aspirant le fluide et assurant la remontée de la bille 71 avec connexion des chambres 67 et 35. L'écoulement rapide du fluide de la chambre basse pression externe 67 vers la chambre haute pression inteme 35 assure un rattrapage rapide du jeu dans la courroie, sans amortissement notable.

Au contraire, lors du rapprochement relatif des extrémités 3 et 13 du tendeur selon la présente invention, la bille 71 est plaquée sur les sièges 73, le clapet est fermé et l'écoulement de la chambre 35 vers la chambre 67 s'effectue uniquement par d'éventuelles fuites, notamment au niveau du clapet formé par la bille 71 et le siège 73. La faible section de passage du fluide assure un amortissement important par perte de charge lors de l'écoulement du fluide. Selon l'amortissement désiré, ces fuites peuvent être importantes, faibles ou négligeables.

On peut également provoquer un écoulement de fluide entre les parois du corps 59 de la cassette 29 et les ouvertures 65. Toutefois, dans l'exemple préféré de réalisation illustré, on évite de telles fuites en interposant un joint torique 81 (illustré dans la condition comprimée) logé dans une gorge annulaire 83 ménagée sur la surface cylindrique du corps 59 de la cassette 29. De plus, le joint 81 étant comprimé entre la paroi radiale de la gorge annulaire 83 et la paroi interne du tube 31 assure, par frottement, l'immobilisation de la cassette à l'extrémité inférieure du tube 31. Les frottements sont suffisants pour éviter toute remontée notable de la cassette 29 sans toutefois empêcher son introduction, par exemple par l'extrémité haute du tube 31 avant l'introduction du piston 33 et la solidarisation de la chape 17, ou, au contraire, par l'extrémité inférieure du tube 31 avant la solidarisation avec l'extrémité inférieure de ce tube de l'embout de fixation 5, par exemple par surmoulage. Dans le cas où des impuretés risqueraient d'être introduites dans le système hydraulique de la cassette, on procède, avantageusement, à un nettoyage de cette cassette, par exemple par passage d'un fluide, notamment de l'air sous haute pression.

Toutefois, les variantes de tendeurs selon la présente invention dans lesquels le piston 33 risque de remonter très rapidement, l'immobilisation de la cassette par le frottement du joint 81 sur la paroi interne du tube 31 peut s'avérer insuffisante. Dans un tel cas, il peut s'avérer nécessaire d'assurer une fixation de la cassette, par exemple par sertissage et déformation externe du tube ou, au contraire, par la déformation radiale d'une portée par exemple annulaire disposée dans la partie supérieure de la cassette 29. Par exemple, après l'introduction de la cassette 29 dans le tube 31 et son positionnement correct, on introduit par l'extrémité supérieure du tube 31 un outil à expansion assurant la déformation plastique de la portée annulaire et son application ferme sur la paroi interne du tube assurant une immobilisation définitive de la cassette.

Dans une autre variante, on introduit dans un premier temps la cassette 29 dans le tube 31 puis, lorsqu'elle a atteint la position désirée, on introduit une bague assurant son immobilisation par frottement et/ou un circlip. Toutefois, l'introduction d'un circlip risque de rayer la paroi interne du tube 31.

Dans une variante différente, le corps de la cassette 29 est muni d'éléments anti retour, par exemple en sapins, qui éviteront sa remontée dans le tube 31 mais qui, également, risquent de rayer la paroi interne du tube 31 lors de l'introduction de la cassette 29. La cassette 29 peut alors assurer l'obturation du tube lors du surmoulage pour éviter la propagation de la matière de surmoulage, à l'intérieur du tube 31.

Le tendeur illustré sur la figure 2 permet un amortissement très important présentant un comportement extrêmement différent lors du rapprochement et lors de l'éloignement de ses extrémités 3 et 13.

Avantageusement, le piston 33 délimite une chambre radiale supérieure 85 remplie de fluide. Les chambres 35 et 85 communiquent, avec forte perte de charge, par les fuites entre la face radialement externe du piston 33 et !a face radialement interne du tube 31 formant cylindre. Ces fuites, outre un rôle d'amortissement, assurent également la lubrification du piston et du cylindre.

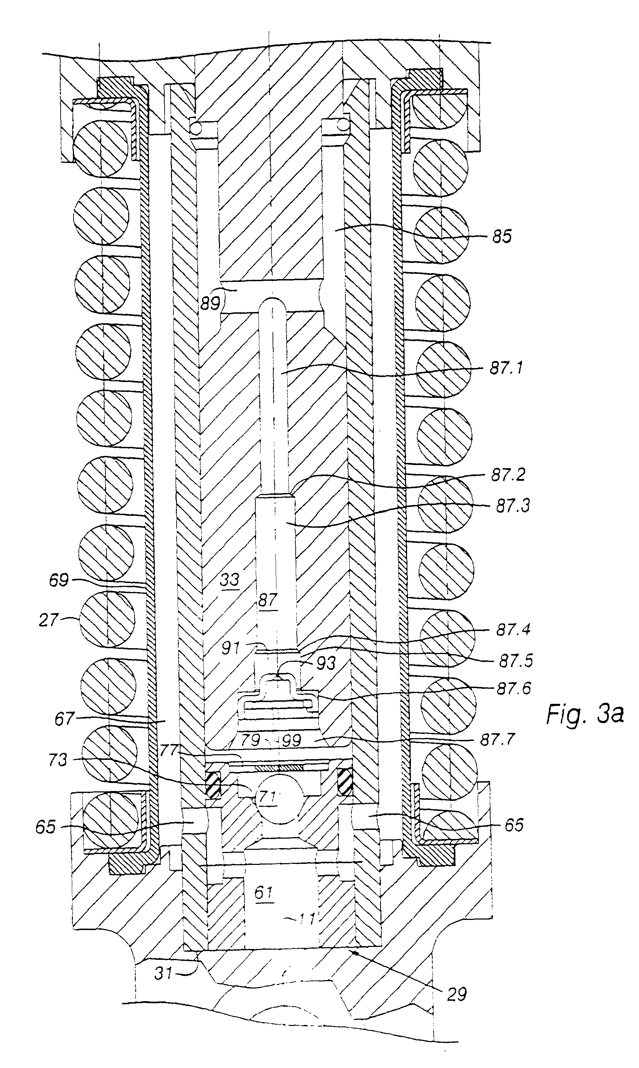

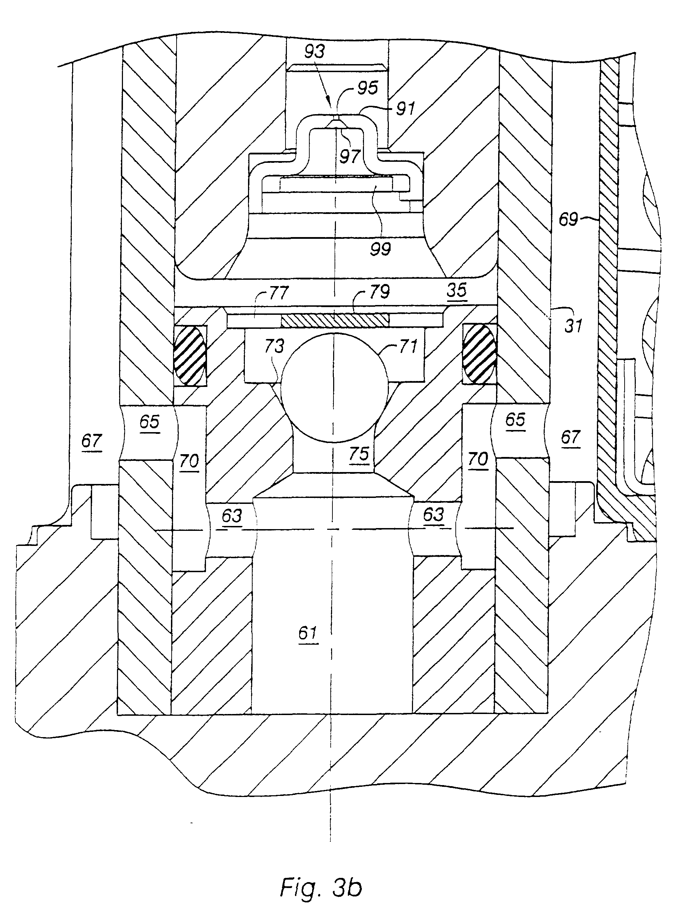

Sur la figure 3, on peut voir un tendeur présentant un amortissement plus faible lors du rapprochement de ces extrémités grâce à des pertes de charge modérées par écoulement du fluide dans un canal axial 87 ménagé dans le piston 33 et reliant les chambres 85 et 35.

L'extrémité supérieure du canal 87 est reliée par au moins un canal radial 89 à la chambre 85. Le canal 87 comporte une première zone 87.1 sensiblement cylindrique ayant un premier diamètre, une zone de transition tronconique 87.2, une deuxième zone cylindrique 87.3 ayant un deuxième diamètre supérieur audit premier diamètre, une deuxième zone de transition 87.4, une troisième zone cylindrique 87.5 ayant un troisième diamètre supérieur audit deuxième diamètre, une quatrième zone cylindrique 87.6 ayant un quatrième diamètre supérieur audit troisième diamètre et une zone évasée 87.7 débouchant sur la face inférieure du cylindre 33. L'extrémité inférieure de la zone 87.5 forme un épaulement dans la zone 87.6 recevant une pièce 91 en forme de cuvette dans le fond de laquelle a été pratiqué un orifice calibré 93 comportant, par exemple, du côté de la chambre 85 une ouverture calibrée 95 de préférence cylindrique raccordée à une zone évasée vers la chambre 35 de préférence tronconique.

Avantageusement, au moins un filtre 99 empêche le colmatage de l'orifice calibré 93 par des poussières. Avantageusement, le piston 33 de la figure 3 est également assemblé en chambre blanche.

Il est bien entendu que la présente invention n'est pas limitée aux tendeurs comportant au moins une des extrémités surmoulées mais englobe également les tendeurs dont les deux extrémités sont munies d'embouts et/ou de chapes ou analogues fixées par tous moyens, notamment par sertissage.

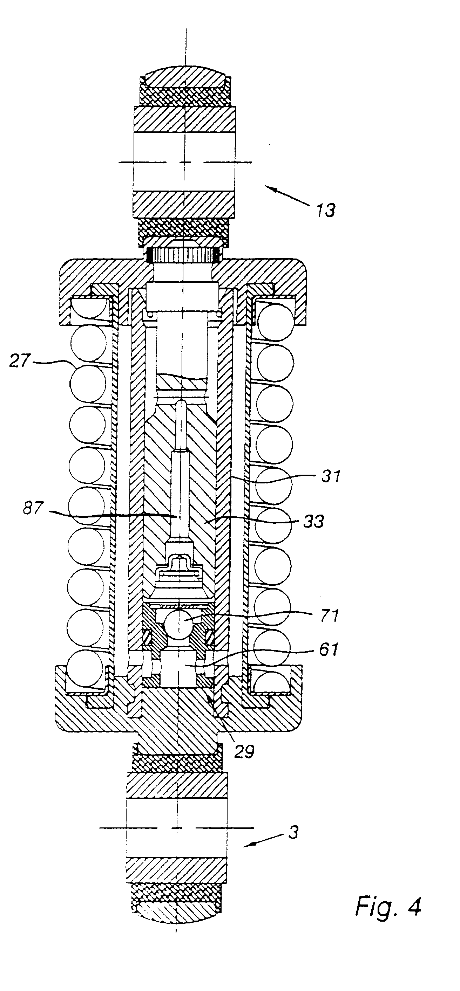

Les tendeurs des figures 2 à 4 sont particulièrement bien adaptés au tensionnement d'une courroie de transmission d'un moteur thermique d'un véhicule automobile. Un exemple non limitatif d'un tel tendeur est illustré sur la figure 4 comprenant une cassette 29 et un piston 33 muni d'un canal axial 87.

Il est bien entendu que le tendeur selon la présente invention peut comporter tout équipement classique des tendeurs, notamment des éléments de rappels du clapet, notamment de la bille permettant d'inverser l'orientation du tendeur, la bille ne risquant pas de rester en position ouverte du clapet, sous l'effet de la pesanteur, lors du rapprochement des extrémités 3 et 13 du tendeur.

De même, la mise en oeuvre de clapets sans bille ne sort pas du cadre de la présente invention. En variante, le tube 31 formant cylindre est solidarisé avec la chape et non pas, comme dans l'exemple préféré de réalisation, avec l'embout 5 de fixation.

La présente invention s'applique principalement à l'industrie automobile.

## Revendications

1. Tendeur pour courroie (15) comprenant une première extrémité (3) comportant des moyens de solidarisation avec un support et une seconde extrémité (13) opposée à ladite première extrémité (3) munie de moyens (19) d'appui sur la courroie (15), les deux extrémités (3, 13) du tendeur étant reliées par un corps élastique (27) et par des moyens de guidage disposés à l'intérieur du corps élastique (27) et comportant un tube (31) formant cylindre solidarisé avec une première desdites extrémités et un piston (33) monté à translation dans ledit tube (31) et solidarisé avec la seconde desdites extrémités, ledit piston (33) délimitant dans le tube (31) formant cylindre au moins une première chambre (35, 85) de volume variable, une seconde chambre annulaire (67) et de volume variable s'étendant autour du tube (31), le piston (33) assurant le pompage d'un fluide de l'une vers l'autre de ces deux chambres lors de la variation de distance relative entre les deux extrémités (3, 13) du tendeur, ledit tendeur comportant en outre une cassette (29) de régulation de l'écoulement du fluide pompé par le piston (33), disposée dans le tube (31) formant cylindre et ayant un corps cylindrique (59) et **caractérisé en ce que** :
- le diamètre externe du corps cylindrique est sensiblement égal au diamètre interne du tube (31) de manière à pouvoir coulisser dans le tube lors de l'assemblage du tendeur,
le corps élastique (27), situé à l'extérieur du tube (31), ne porte pas sur la cassette (29), de sorte que ladite cassette (29) peut être supprimée pour obtenir un tendeur sans régulation de l'écoulement d'un fluide, et
- des ouvertures (65) traversent latéralement le tube (31) de façon à mettre en contact direct les chambres (35 ; 67), même lorsque la cassette (29) est supprimée.

2. Tendeur selon la revendication 1, **caractérisé en ce que** la cassette (29) comporte un clapet se fermant lors du rapprochement des deux extrémités (3, 13) du tendeur.

3. Tendeur selon la revendication 1 ou 2, **caractérisé en ce qu'**il comporte une ouverture calibrée (93).

4. Tendeur selon l'une quelconque des revendications précédentes, **caractérisé en ce qu'**il comporte des moyens (81) d'immobilisation axiale par frottement de la cassette (29) dans le tube (31).

5. Tendeur selon la revendication 4, **caractérisé en ce que** les moyens (81) d'immobilisation axiale de la cassette (29) dans le tube (31) est un joint annulaire.

6. Tendeur selon la revendication 5, **caractérisé en ce que** le joint annulaire (81) assurant l'immobilisation axiale de la cassette (29) dans le tube (31) est un joint torique disposé dans une gorge annulaire (83) ménagée dans le corps (59) de la cassette (29) et débouchant sur la face interne du tube (31 ).

7. Tendeur selon l'une quelconque des revendications 2 à 6, **caractérisé en ce que** le clapet est un clapet à bille (71).

8. Tendeur selon l'une quelconque des revendications précédentes, **caractérisé en ce qu'**il comporte un canal (87) ménagé dans le piston (33) muni d'un orifice calibré (93) permettant l'écoulement de fluide entre une première chambre (35) à volume variable, délimité par le piston (33) et une deuxième chambre (85), à volume variable, délimité par le piston (33).

9. Tendeur selon l'une quelconque des revendications précédentes, **caractérisé en ce qu'**il comporte un filtre (79, 99) de protection de l'orifice calibré (93) et/ou du clapet contre la contamination par des impuretés portées par le fluide.

10. Tendeur selon l'une quelconque des revendications précédentes, **caractérisé en ce qu'**il comporte un embout de fixation (5) surmoulé sur une des extrémités du tube (31) et **en ce que** la cassette (29) se trouve à proximité de l'extrémité du tube (31) portant l'embout de fixation (5).

11. Tendeur selon l'une quelconque des revendications précédentes, **caractérisé en ce que** la cassette (29) comporte une portée rigide, déformée plastiquement de manière à prendre appui sur la face interne du tube (31), en immobilisant la cassette (29) dans le tube (31) dans la position désirée.

12. Procédé de fabrication d'un tendeur selon l'une quelconque des revendications précédentes, **caractérisé en ce qu'**il comporte les étapes consistant à :
a) solidariser un embout de fixation (5) ou des moyens (17) supports d'un moyen d'appui sur une courroie (15) à une extrémité d'un tube (31) de réception d'un piston (33) ;
b) introduire axialement, par l'extrémité opposée libre du tube, une cassette (29) de régulation de l'écoulement de fluide ;
c) solidariser l'extrémité du piston (33) qui n'est pas engagée dans le tube (31) avec des moyens (17) supports d'un moyen d'appui sur une courroie (15) ou avec un embout de fixation (5).

13. Procédé selon la revendication 12, **caractérisé en ce qu'**entre les étapes b) et c), il comporte en outre une étape consistant à faire translater la cassette (29), sur sensiblement toute la longueur du tube (31) en direction de l'embout de fixation (5).

14. Procédé de fabrication d'un tendeur selon l'une quelconque des revendications 1 à 10, **caractérisé en ce qu'**il comporte des étapes consistant à :
- introduire dans un tube (31) une cassette (29) de régulation de l'écoulement de fluide ;
- surmouler un élément d'extrémité du tendeur choisi dans un ensemble comportant un embout de fixation (5) et des moyens (17) supports d'un moyen d'appui (19) sur une courroie (15), à une extrémité du tube (31), en utilisant la cassette (29) comme moyen d'obturation du tube lors du surmoulage empêchant la propagation de la matière de surmoulage dans le tube (31) ;
- fixer à l'extrémité du piston (33) qui n'est pas engagée dans le tube (31) l'autre élément d'extrémité du tendeur choisi dans un ensemble comportant des moyens (17) supports d'un moyen d'appui (19) sur une courroie (15) et un embout de fixation (5).

15. Procédé selon la revendication 14, **caractérisé en ce que** l'élément d'extrémité du tendeur surmoulé est un embout de fixation (5).

## Patentansprüche

1. Spannvorrichtung für einen Riemen (15), umfassend ein erstes Ende (3), welches Mittel zum Verbinden mit einer Stütze umfasst, und ein dem ersten Ende (3) gegenüberliegendes zweites Ende (13), welches mit Mitteln (19) zum Drücken gegen den Riemen (15) ausgestattet ist, wobei die zwei Enden (3, 13) der Spannvorrichtung durch einen elastischen Körper (27) und durch im Inneren des elastischen Körpers (27) angeordnete Führungsmittel, welche eine zylindrisch ausgebildete mit einem ersten der Enden verbundene Röhre (31) und einen beweglich in der Röhre (31) angebrachten und mit dem zweiten der Enden verbundenen Kolben umfasst, verbunden sind, wobei der Kolben (33) in der zylindrisch ausgebildeten Röhre (31) zumindest eine erste Kammer (35, 85) mit variablen Volumen begrenzt, wobei sich eine zweite ringförmige Kammer (67) mit variablen Volumen um die Röhre (31) erstreckt, wobei der Kolben (33) das Pumpen einer Flüssigkeit von einer zu der anderen der zwei Kammern bei Änderung der relativen Entfernung zwischen den zwei Enden (3, 13) der Spannvorrichtung sicherstellt, wobei die Spannvorrichtung weiterhin eine Kassette (29) zur Regulierung des Flusses der durch den Kolben (33) gepumpten Flüssigkeit umfasst, welche in der zylindrisch ausgebildeten Röhre (31) angeordnet ist und einen zylindrischen Körper (59) hat, und **dadurch gekennzeichnet, dass**:
- der Außendurchmesser des zylindrischen Körpers in einer Weise im Wesentlichen gleich dem Innendurchmesser der Röhre (31) ist, dass er beim Zusammenbau der Spannvorrichtung in der Röhre gleiten kann,
- der außerhalb der Röhre (31) angeordnete elastische Körper nicht auf der Kassette (29) liegt, in einer Weise, dass die Kassette (29) gesperrt werden kann, um eine Spannvorrichtung ohne Regulierung des Flusses einer Flüssigkeit zu erhalten, und
- Öffnungen (65) lateral durch die Röhre (31) in einer Weise hindurchgehen, dass sie die Kammern (35; 67), auch während die Kassette (29) gesperrt ist, in direkten Kontakt bringen.

2. Spannvorrichtung gemäß Anspruch 1, **dadurch gekennzeichnet, dass** die Kassette (29) ein Ventil umfasst, welches sich beim Annähern der zwei Enden (3, 13) der Spannvorrichtung schließt.

3. Spannvorrichtung gemäß Anspruch 1 oder 2, **dadurch gekennzeichnet, dass** sie eine kalibrierte Öffnung (93) umfasst.

4. Spannvorrichtung gemäß einem der vorhergehenden Ansprüche, **dadurch gekennzeichnet, dass** sie Mittel (81) zur axialen Unbeweglichmachung der Kassette (29) in der Röhre (31) durch Reibung umfasst.

5. Spannvorrichtung gemäß Anspruch 4, **dadurch gekennzeichnet, dass** die Mittel (81) zur axialen Unbeweglichmachung der Kassette (29) in der Röhre (31) eine ringförmige Dichtung sind.

6. Spannvorrichtung gemäß Anspruch 5, **dadurch gekennzeichnet, dass** die die axiale Unbeweglichmachung der Kassette (29) in der Röhre (31) sicherstellende ringförmige Dichtung eine torische Dichtung ist, welche in einer in dem Körper (59) der Kassette (29) angeordneten ringförmigen Vertiefung angeordnet ist, welche an der inneren Oberfläche der Röhre (31) mündet.

7. Spannvorrichtung gemäß einem der Ansprüche 2 bis 6, **dadurch gekennzeichnet, dass** das Ventil ein Kugelventil (71) ist.

8. Spannvorrichtung gemäß einem der vorhergehenden Ansprüche, **dadurch gekennzeichnet, dass** sie einen in dem Kolben (33) angeordneten Kanal (87) umfasst, welcher mit einer kalibrierten Mündung (93) ausgestattet ist, welche den Fluss von Flüssigkeit zwischen einer ersten Kammer (35) mit variablen Volumen, begrenzt durch den Kolben (33), und einer zweiten Kammer (85) mit variablen Volumen, begrenzt durch den Kolben (33), gestattet.

9. Spannvorrichtung gemäß einem der vorhergehenden Ansprüche, **dadurch gekennzeichnet, dass** sie einen Filter (79, 99) zum Schutz der kalibrierten Mündung (93) und/oder des Ventils vor Kontaminierung durch von der Flüssigkeit transportierten Unreinheiten umfasst.

10. Spannvorrichtung gemäß einem der vorhergehenden Ansprüche, **dadurch gekennzeichnet, dass** sie einen auf eines der Enden der Röhre (31) aufgeformten Befestigungsflansch (5) umfasst und dass sich in ihr die Kassette (29) nahe bei dem den Befestigungsflansch (5) tragenden Ende der Röhre (31) findet.

11. Spannvorrichtung gemäß einem der vorhergehenden Ansprüche, **dadurch gekennzeichnet, dass** die Kassette (29) eine steife Lagerfläche umfasst, welche plastisch in einer Weise deformiert ist, dass sie beim Unbeweglichmachen der Kassette (29) in der Röhre (31) in der gewünschten Position gegen die innere Oberfläche der Röhre (31) stößt.

12. Verfahren zur Herstellung einer Spannvorrichtung gemäß einem der vorhergehenden Ansprüche, **dadurch gekennzeichnet, dass** es die Schritte umfasst, welche bestehen aus:
a) Verbinden eines Befestigungsflansches (5) oder von Trägermitteln (17) eines Mittels zum Drücken gegen einen Riemen (15) mit einem Ende einer Röhre (31) zum Aufnehmen eines Kolbens (33),
b) axiales Einführen einer Kassette (29) zur Regulierung des Flusses von Flüssigkeit durch das freie gegenüberliegende Ende der Röhre,
c) Verbinden des nicht in der Röhre (31) in Eingriff stehenden Endes des Kolbens (33) mit Trägermitteln (17) eines Mittels des Drückens gegen einen Riemen (15) oder mit einem Befestigungsflansch (5).

13. Verfahren gemäß Anspruch 12, **dadurch gekennzeichnet, dass** es zwischen den Schritten b) und c) weiterhin einen Schritt umfasst, welcher darin besteht, die Kassette (29) im Wesentlichen über die gesamte Länge der Röhre (31) in Richtung des Befestigungsflansches (5) zu bewegen.

14. Verfahren zur Herstellung einer Spannvorrichtung gemäß einem der Ansprüche 1 bis 10, **dadurch gekennzeichnet, dass** es die Schritte umfasst, welche bestehen aus:
- Einführen einer Kassette (29) zur Regulierung des Flusses von Flüssigkeit in eine Röhre (31),
- Aufformen eines Endelements der Spannvorrichtung, ausgewählt aus einer Gruppe umfassend einen Befestigungsflansch (5) und Trägermittel (17) eines Mittels zum Drücken (19) gegen einen Riemen (15), auf ein Ende der Röhre (31), wobei die Kassette (29) zum Verschluss der Röhre während des Aufformens benutzt wird, um die Ausbreitung des Aufformmaterials in die Röhre (31) zu behindern,
- Befestigen des anderen Endelements der Spannvorrichtung, ausgewählt aus einer Gruppe umfassend Trägermittel (17) zum Stützen eines Mittels zum Drücken (19) gegen einen Riemen (15) und einen Befestigungsflansch (5), an dem Ende des Kolbens (33), welches nicht in der Röhre (31) in Eingriff steht.

15. Verfahren gemäß Anspruch 14, **dadurch gekennzeichnet, dass** das aufgeformte Endelement der Spannvorrichtung ein Befestigungsflansch (5) ist.

## Claims

1. Belt tensioner (15) comprising a first end (3) having means for securing it to a support and a second end (13) opposite the said first end (3) provided with means (19) for bearing on the belt (15), the two ends (3, 13) of the tensioner being connected by an elastic body (27) and by guiding means positioned inside the elastic body (27) and having a tube (31) forming a cylinder secured to the first of the said ends and a piston (33) mounted in translation in the said tube (31) and secured to the second of the said ends, the said piston (33) delimiting in the tube (31) forming a cylinder at least one first chamber (35, 85) with a variable volume, a second annular chamber (67) with a variable volume extending around the tube (31), the piston (33) ensuring that a fluid is pumped from one to the other of these two chambers when there is a variation in the relative distance between the two ends (3, 13) of the tensioner, the said tensioner including additionally a cartridge (29) for regulating the flow of fluid pumped by the piston (33), positioned in the tube (31) forming a cylinder and having a cylindrical body (59) and **characterized in that** :
- the external diameter of the cylindrical body is substantially equal to the internal diameter of the tube (31) so that it can slide inside the tube when the tensioner is assembled,
- the elastic body (27), situated outside the tube (31) does not come to bear upon the cartridge (29) so that the said cartridge (29) can be removed in order to obtain a tensioner without regulation of the flow of a fluid, and
- openings (65) traversing the tube (31) laterally so as to put the chambers (35; 67) into direct contact even when the cartridge (29) is removed.

2. Tensioner according to claim 1, **characterized in that** the cartridge (29) has a valve which closes when the two ends (3, 13) of the tensioner move towards each other.

3. Tensioner according to claim 1 or 2, **characterised in that** it includes a calibrated opening (93).

4. Tensioner according to any one of the preceding claims, **characterised in that** it includes means (81) for the axial immobilisation by friction of the cartridge (29) in the tube (31).

5. Tensioner according to claim 4, **characterised in that** the means (81) for axially immobilising the cartridge (29) in the tube (31) is an annular seal.

6. Tensioner according to claim 5, **characterised in that** the annular seal (81) providing the axial immobilisation of the cartridge (29) in the tube (31) is an O-ring positioned in an annular groove (83) provided in the body (59) of the cartridge (29) and emerging on the inner face of the tube (31).

7. Tensioner according to any one of claims 2 to 6, **characterised in that** the valve is a ball valve (71).

8. Tensioner according to any one of the preceding claims, **characterised in that** it includes a channel (87) provided in the piston (33) provided with a calibrated orifice (93) enabling fluid to flow between a first chamber (35) with a variable volume delimited by the piston (33) and a second chamber (85) with a variable volume delimited by the piston (33).

9. Tensioner according to any one of the preceding claims, **characterised in that** it includes a filter (79,99) for protecting the calibrated orifice (93) and/or the valve against contamination by impurities carried by the fluid.

10. Tensioner according to any one of the preceding claims, **characterised in that** it includes a fixing end piece (5) overmoulded onto one of the ends of the tubes 31 and **in that** the cartridge (29) is situated close to the end of the tube (31) carrying the fixing end piece (5).

11. Tensioner according to any one of the preceding claims, **characterised in that** the cartridge (29) includes a rigid seat, deformed plastically so as to rest on the inner face of the tube (31), while immobilising the cartridge (29) in the tube (31) in the desired position.

12. Method for producing a tensioner according to any one of the preceding claims, **characterised in that** it comprises steps consisting of :
a) securing a fixing end piece (5) or supporting means (17) of a means for bearing on a belt (15) to one end of a tube (31) for receiving a piston (33);
b) introducing axially, through the opposite free end of the tube, a cartridge (29) for regulating the flow of fluid;
c) securing the end of the piston (33) which is not engaged in the tube (31) to the supporting means (17) of a means of bearing on a belt (15) or to a fixing end piece (5).

13. Method according to claim 12, **characterised in that** it additionally includes, between the steps b) and c), a step consisting of causing the cartridge (29) to move in translation over substantially all the length of the tube (31) in the direction of the fixing end piece (5).

14. Method for manufacturing a tensioner according to any one of claims 1 to 10, **characterised in that** it comprises steps consisting of :
- introducing into a tube (31) a cartridge (29) for regulating the flow of fluid;
- overmoulding an end element of the tensioner chosen from an assembly comprising a fixing end piece (5) and supporting means (17) of a means (19) for bearing on a belt (15) to one end of the tube (31), while using the cartridge (29) as a means for blocking the tube during overmoulding, preventing the propagation of the overmoulding material into the tube (31);
- attaching to the end of the piston (33) which is not engaged in the tube (31), the other end element of the tensioner chosen from an assembly comprising supporting means (17) of a means (19) for bearing on a belt (15) and a fixing end-piece (5).

15. Method according to claim 14, **characterised in that** the over moulded end element of the tensioner is a fixing end piece (5).
